(19) Europäisches Patentamt
European Patent Office
Office européen des brevets

(11) EP 4 756 905 A1

(12) # EUROPEAN PATENT APPLICATION
published in accordance with Art. 153(4) EPC

(43) Date of publication:
**10.06.2026 Bulletin 2026/24**

(21) Application number: **24849069.0**

(22) Date of filing: **25.07.2024**

(51) International Patent Classification (IPC):
***H01M 4/36*** (2006.01) ***H01M 4/38*** (2006.01)

(52) Cooperative Patent Classification (CPC):
**H01M 4/36; H01M 4/38;** Y02E 60/10

(86) International application number:
**PCT/JP2024/026719**

(87) International publication number:
**WO 2025/028415 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023126509**

(71) Applicant: **Panasonic Intellectual Property Management Co., Ltd.**
**Kadoma-shi, Osaka 571-0057 (JP)**

(72) Inventors:
- **SATO, Shin**
  **Kadoma-shi, Osaka 571-0057 (JP)**
- **JIN, Takuya**
  **Kadoma-shi, Osaka 571-0057 (JP)**
- **SAKATA, Motohiro**
  **Kadoma-shi, Osaka 571-0057 (JP)**
- **SATO, Yosuke**
  **Kadoma-shi, Osaka 571-0057 (JP)**

(74) Representative: **Novagraaf International SA**
**Chemin de l'Echo 3**
**1213 Onex, Geneva (CH)**

(54) **NEGATIVE-ELECTRODE ACTIVE MATERIAL AND BATTERY**

(57) A negative electrode active material 10 of the present disclosure includes a composite particle 1 and a coating layer 4 coating at least a part of a surface of the composite particle 1, the composite particle 1 includes an alkali aluminate phase 2 including at least one alkali metal element and Al, and a silicon phase 3 dispersed in the alkali aluminate phase 2, and the coating layer 4 includes a lithium sulfonate compound and a hydrophobic polymer compound.

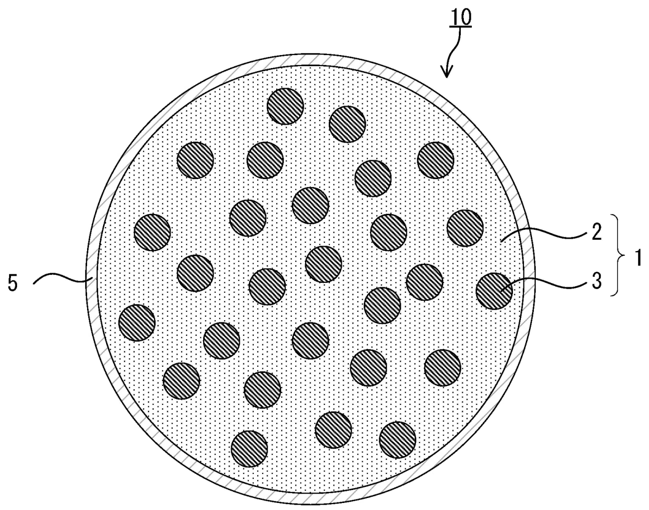


FIG.1



Processed by Luminess, 75001 PARIS (FR)

## Description

### TECHNICAL FIELD

The present disclosure relates to a negative electrode active material and a battery.

### BACKGROUND ART

In recent years, secondary batteries such as lithium-ion batteries have been widely used as power sources for electronic devices such as mobile terminals, power sources for vehicles such as electric vehicles, etc. In recent years, the use of silicon-containing materials has been attracting attention as negative electrode active materials having a high theoretical capacity density. As conventional silicon-containing materials, for example, a material in which silicon particles are dispersed in a $SiO_2$ phase, a material in which silicon particles are dispersed in a lithium silicate phase including Li, Si, and O (hereinafter sometimes referred to as "LSX"), etc., are known.

In addition, PATENT LITERATURE 1 discloses a negative electrode active material for secondary batteries that includes composite particles each including a lithium aluminate phase and a silicon phase dispersed in the lithium aluminate phase. Since the negative electrode active material disclosed in PATENT LITERATURE 1 includes composite particles (hereinafter sometimes referred to as "LAX particles") in each of which a silicon phase is dispersed in a lithium aluminate phase having excellent alkali resistance, the negative electrode active material can reduce side reactions during initial charge/discharge of a lithium-ion secondary battery and suppress a decrease in the initial charge-discharge efficiency of the battery.

### CITATION LIST

#### Patent Literature

PATENT LITERATURE 1: WO 2022/113500 A1

### SUMMARY OF INVENTION

#### Technical Problem

As described above, a negative electrode active material including LAX particles can suppress a decrease in the initial charge-discharge efficiency of a battery.

However, the negative electrode active material including LAX particles has a problem that the negative electrode active material deteriorates due to erosion of a lithium aluminate phase caused by side reactions between the composite particles and an electrolyte, and there is a demand for improving the cycle characteristics of the battery.

#### Solution to Problem

A negative electrode active material of the present disclosure includes:

a composite particle; and
a coating layer coating at least a part of a surface of the composite particle, wherein
the composite particle includes an alkali aluminate phase including at least one alkali metal element and Al, and a silicon phase dispersed in the alkali aluminate phase, and
the coating layer includes a lithium sulfonate compound and a hydrophobic polymer compound.

#### Advantageous Effects of Invention

According to the technology of the present disclosure, it is possible to provide a negative electrode active material that can improve the cycle characteristics of a battery.

BRIEF DESCRIPTION OF THE DRAWINGS

FIG. 1 is a cross-sectional view showing a schematic configuration of an example of a negative electrode active material according to an embodiment.

FIG. 2 is a cross-sectional view showing a schematic configuration of another example of the negative electrode active material according to the embodiment.

FIG. 3 is a cross-sectional view showing a schematic configuration of an example of a battery according to the embodiment.

FIG. 4 is a cross-sectional view showing a schematic configuration of another example of the battery according to the embodiment.

DESCRIPTION OF EMBODIMENTS

Hereinafter, an embodiment of the present disclosure will be described in detail with reference to the drawings. The present disclosure is not limited to the following embodiment.

(Negative Electrode Active Material)

FIG. 1 is a cross-sectional view showing a schematic configuration of an example of a negative electrode active material according to the present embodiment. A negative electrode active material 10 includes a composite particle 1 and a coating layer 5 coating at least a part of the surface of the composite particle 1. The composite particle 1 includes an alkali aluminate phase 2 and a silicon phase 3 dispersed in the alkali aluminate phase 2. The alkali aluminate phase 2 includes at least one alkali metal element and Al. The coating layer 5 includes a lithium sulfonate compound and a hydrophobic polymer compound.

By coating at least a part of the surface of the composite particle 1 with the coating layer 5, contact between the composite particle 1 and an electrolyte is hindered, and thus side reactions between the negative electrode active material 10 and the electrolyte are suppressed. Accordingly, erosion of the alkali aluminate phase 2 due to the side reactions is suppressed, and thus deterioration of the negative electrode active material 10 caused by the erosion is suppressed. Therefore, the cycle characteristics of a battery are improved, and the charge-discharge efficiency thereof is also improved.

Since the coating layer 5 includes the lithium sulfonate compound, the coating layer 5 has good ionic conductivity, and thus can suppress side reactions in the battery. Since the coating layer 5 includes the hydrophobic polymer compound, the retention of the lithium sulfonate compound on the surface of the composite particle 1 is improved, and the surface of the composite particle 1 is effectively coated with the lithium sulfonate compound. Accordingly, a significant effect of suppressing the side reactions between the negative electrode active material 10 and the electrolyte is obtained. Therefore, the cycle characteristics and further the charge-discharge efficiency of the battery are improved.

The composite particle 1 may include other elements in addition to the alkali aluminate phase 2 and the silicon phase 3. For example, the composite particle 1 may further include a conductive layer.

FIG. 2 is a cross-sectional view showing a schematic configuration of another example of the negative electrode active material according to the present embodiment. A negative electrode active material 20 includes a composite particle 6 and a coating layer 5 coating at least a part of the surface of the composite particle 6. The composite particle 6 includes an alkali aluminate phase 2 and a silicon phase 3 dispersed in the alkali aluminate phase 2. The composite particle 6 further includes a conductive layer 4 coating at least a part of the surface of a particle composed of the alkali aluminate phase 2 and the silicon phase 3. The conductive layer 4 is located between the coating layer 5 and the particle composed of the alkali aluminate phase 2 and the silicon phase 3. Hereinafter, the particle composed of the alkali aluminate phase 2 and the silicon phase 3 is referred to as "base particle". That is, the conductive layer 4 coats at least a part of the surface of the base particle. With the above configuration, the conductivity is improved.

Each component of the negative electrode active material of the present embodiment will be specifically described below.

[Composite Particle]

The following description of a composite particle can be applied to both the composite particle 1 shown in FIG. 1 and the composite particle 6 shown in FIG. 2.

The composite particle has, for example, a sea-island structure in which a plurality of fine silicon phases 3 are dispersed in a matrix of the alkali aluminate phase 2. Accordingly, the stress caused by expansion and contraction of the

silicon phase 3 during charge and discharge is alleviated by the alkali aluminate phase 2, thereby suppressing cracks and fractures of the composite particle. Therefore, both a higher capacity and improved cycle characteristics by containing silicon can be achieved. The composite particle includes, for example, a base particle composed of the alkali aluminate phase 2 and the silicon phase 3, and a conductive layer 4 coating at least a part of the surface of the base particle. Alternatively, the composite particle may be composed of only the base particle.

The average particle diameter of the composite particle may be 1 μm or more and 25 μm or less, or 4 μm or more and 15 μm or less. With the above configuration, the stress caused by change in the volume of the composite particle due to charge and discharge is easily alleviated, and good cycle characteristics are easily obtained. In addition, the surface area of the composite particle becomes appropriate, and thus a decrease in capacity due to side reactions with the electrolyte is suppressed.

The average particle diameter of the composite particle means a particle diameter at which a volumetric integrated value is 50% in a particle size distribution measured by a laser diffraction scattering method (volume-average particle diameter). For the measurement apparatus, "LA-750", manufactured by HORIBA, Ltd., may be used, for example. When the surface of the base particle is coated with the conductive layer 4, the thickness of the conductive layer 4 is small so as not to substantially affect the average particle diameter of the composite particle, and thus the average particle diameter of the composite particle 1 and the average particle diameter of the composite particle 6 having the conductive layer 4 may be considered to be substantially the same.

The composite particle can be taken out of the battery by the following method. The following method is an example.

First, the battery in a fully discharged state is disassembled to take out a negative electrode, and the negative electrode is washed with, for example, anhydrous ethyl methyl carbonate or dimethyl carbonate to remove the non-aqueous electrolyte component. A negative electrode mixture layer is peeled from a current collector (for example, copper foil) that is a negative electrode core, and the mixture layer is crushed with a mortar to obtain a sample powder. Next, the sample powder is dried in a dry atmosphere for 1 hour and immersed in, for example, gently boiled 6M hydrochloric acid for about 10 minutes to remove elements derived from components other than the composite particle. Next, the sample powder is washed with ion-exchanged water, filtered, and dried at 200°C for 1 hour, for example. The fully discharged state is a state where a depth of discharge (DOD) is 90% or more (the state of charge (SOC) is 10% or less).

The alkali aluminate phase 2 includes at least one alkali metal element, aluminum (Al), and oxygen (O). The alkali aluminate phase 2 is a phase including an alkali aluminate which is a composite oxide including at least one alkali metal element and Al.

The alkali aluminate phase 2 has good ionic conductivity, and ions such as Li ions are smoothly occluded and released by the silicon phase 3 through the alkali aluminate phase 2. In addition, the influence of expansion and contraction of the silicon phase 3 is alleviated by the alkali aluminate phase 2.

The alkali aluminate phase 2 has better alkali resistance than a lithium silicate phase in LSX. Therefore, with the negative electrode active material of the present embodiment, compared to a negative electrode active material using LSX, for example, side reactions with Li ions during initial charge are suppressed, and deterioration of the negative electrode active material due to the side reactions is suppressed.

An atomic ratio (O/Al) of O to Al in the alkali aluminate is, for example, 1.6 or more and 4 or less. In addition, an atomic ratio (MA/Al) of alkali metal (MA) to Al in the alkali aluminate is, for example, 1/5 or more and 5 or less. When these atomic ratios are within the above ranges, the stability and ionic conductivity of the alkali aluminate phase 2 become better. In this description, the stability of the alkali aluminate phase 2 includes both the chemical stability (alkali resistance) and the thermal stability of the alkali aluminate phase 2.

The alkali metal element is an element that belongs to Group 1 of the periodic table. That is, the alkali aluminate phase 2 contains at least one element selected from the group consisting of Li, Na, K, Rb, Cs, and Fr.

The alkali metal element may include at least one selected from the group consisting of Li, Na, and K. The alkali metal element may include at least one selected from the group consisting of Li and Na, and may include Li.

The alkali aluminate phase 2 may include two types of alkali metal elements. The alkali aluminate phase 2 may include at least two selected from the group consisting of Li, Na, and K, or may include Li and Na.

The alkali aluminate phase 2 may further contain an element M in addition to the alkali metal element, Al, and O. An example of the element M is at least one selected from the group consisting of calcium (Ca), magnesium (Mg), zirconium (Zr), iron (Fe), boron (B), phosphorus (P), and lanthanum (La).

The element M may form a compound. The compound may be, for example, an oxide of the element M or an aluminate of the element M, depending on the type of the element M.

The element M may be B. That is, the alkali aluminate phase 2 may further include B. By the addition of the element M, for example, the stability and ionic conductivity of the alkali aluminate phase 2 are improved. In addition, by the addition of the element M, the porosity of the composite particle 1 can be reduced. Accordingly, the number of portions that can become starting points of cracks and fractures when charge and discharge are repeated is reduced. Thus, deterioration of the negative electrode active material 10 is suppressed, and the cycle characteristics of the battery

are further improved.

The alkali aluminate phase 2 may further include trace amounts of elements such as chromium (Cr), nickel (Ni), manganese (Mn), copper (Cu), and molybdenum (Mo).

The alkali aluminate phase 2 may be amorphous. In this case, the influence of expansion and contraction of the silicon phase 3 can be more effectively alleviated.

In the alkali aluminate phase 2, a fine $Al_2O_3$ phase having high crystallinity may be dispersed. The $Al_2O_3$ phase is distributed in the form of islands in the matrix of the alkali aluminate phase 2. In this case, expansion and cracks of the alkali aluminate phase 2 due to expansion and contraction of the silicon phase 3 are easily suppressed, and the effect of improving cycle characteristics is enhanced. When an $Al_2O_3$ phase is present, a peak derived from the $Al_2O_3$ phase can be observed around 2θ = 25.4° in an X-ray diffraction pattern of the composite particle obtained by X-ray diffraction measurement. The content of $Al_2O_3$ in the composite particle is 10 mass% or less.

The silicon phase 3 is a phase of elemental Si, and repeatedly occludes and releases Li ions as the battery is charged and discharged. A capacitance is generated by a Faraday reaction involving the silicon phase 3. The silicon phase 3 has a large capacitance. Furthermore, the silicon phase 3 undergoes a large degree of expansion and contraction during charge and discharge. In the negative electrode active material of the present disclosure, since the silicon phase 3 is dispersed in the alkali aluminate phase 2, the stress caused by expansion and contraction of the silicon phase 3 is alleviated by the alkali aluminate phase 2.

The silicon phase 3 may be in the form of particles. The silicon phase 3 is, for example, in the form of particles at least before the first charge. The average particle diameter of the silicon phase 3 may be 1 nm or more and 1000 nm or less. The average particle diameter of the silicon phase 3 may be 500 nm or less, 200 nm or less, or 50 nm or less. After the first charge, the average particle diameter of the silicon phase 3 may be 400 nm or less, or 100 nm or less. By dispersing the fine silicon phase 3 in the alkali aluminate phase 2 as described above, the change in the volume of the composite particle during charge and discharge is reduced, and the structural stability of the negative electrode active material is further improved.

The average particle diameter of the silicon phase 3 can be measured using a scanning electron microscope (SEM) image obtained by observing a cross-section of the negative electrode active material in which a cross-section of the silicon phase 3 is exposed, with an SEM. Specifically, the average particle diameter of the silicon phase 3 is determined by averaging the maximum diameters of 100 silicon phases 3 arbitrarily selected from the cross-sectional SEM image of the negative electrode active material.

The silicon phase 3 may include crystalline silicon. The silicon phase 3 is composed of, for example, a plurality of crystallites. The crystallite size of the silicon phase 3 may be 30 nm or less, 20 nm or less, or 15 nm or less. As a result, change in volume due to expansion and contraction of the silicon phase 3 during charge and discharge can be reduced, and the effect of improving cycle characteristics becomes more remarkable. The crystallite size of the silicon phase 3 is calculated using the Scherrer equation from the full width at half maximum of a diffraction peak derived from the Si(111) plane in an X-ray diffraction pattern obtained by X-ray diffraction measurement using Cu-Kα rays.

The lower limit value of the crystallite size of the silicon phase 3 is not particularly limited, but is, for example, 1 nm. An example of a suitable crystallite size of the silicon phase 3 is 1 nm or more and 15 nm or less and may be 5 nm or more and 11 nm or less. When the crystallite size of the silicon phase 3 is 1 nm or more, for example, the surface area of the silicon phase 3 can be reduced to be small, and therefore deterioration of the silicon phase 3 which is accompanied by the generation of irreversible capacity is less likely to occur. When the crystallite size is 15 nm or less, the expansion and contraction of the silicon phase 3 are easily made uniform, and the stress generated in the negative electrode active material is effectively alleviated.

From the viewpoint of increasing capacity, the content rate of the silicon phase 3 in the composite particle may be 30 mass% or more, 35 mass% or more, or 55 mass% or more. From the viewpoint of improving cycle characteristics, the content rate of the silicon phase 3 in the composite particle may be 95 mass% or less, 75 mass% or less, or 70 mass% or less. In this case, the silicon phase 3 exposed on the surface of the composite particle without being coated with the alkali aluminate phase 2 is reduced, and side reactions between the electrolyte and the silicon phase 3 are also suppressed. The content rate of the silicon phase 3 in the composite particle may be 30 mass% or more and 90 mass% or less, or 35 mass% or more and 75 mass% or less.

The content rate of the silicon phase 3 in the composite particle is determined by quantifying the amount of Si constituting the silicon phase 3 in the composite particle, using Si-NMR, as will be described later.

The composite particle may be substantially free of lithium silicate and $SiO_2$. The total content of lithium silicate and $SiO_2$ in the composite particle may be, for example, 3 mass% or less.

The mass ratio (mAl) of Al to the total mass of elements excluding oxygen (O) constituting the alkali aluminate phase 2 and the silicon phase 3 may be 10 mass% or more and 47 mass% or less, or 11.5 mass% or more and 45.5 mass% or less.

The mass ratio (mMA) of the alkali metal element to the total mass of the elements excluding O constituting the alkali aluminate phase 2 and the silicon phase 3 may be 0.7 mass% or more and 13.5 mass% or less, 1.0 mass% or more

and 9.5 mass% or less, or 1.5 mass% or more and 3.5 mass% or less.

With the above configuration, the stability and ionic conductivity of the alkali aluminate phase 2 can be improved. The above stability includes both chemical stability (alkali resistance) and thermal stability.

The ratio (mMA/mAl) of the mass ratio (mMA) of the alkali metal element to the mass ratio (mAl) of Al may be 0.01 or more and 0.50 or less, or 0.05 or more and 0.25 or less, from the viewpoint of the stability and ionic conductivity of the alkali aluminate phase 2.

The mass ratio (mSi) of Si to the total mass of the elements excluding O constituting the alkali aluminate phase 2 and the silicon phase 3 may be 40 mass% or more and 90 mass% or less, or 50.8 mass% or more and 85.5 mass% or less. With the above configuration, the battery can easily achieve both high capacity and good cycle characteristics.

When the alkali aluminate phase 2 further includes B, the mass ratio (mB) of B to the total mass of the elements excluding O constituting the alkali aluminate phase 2 and the silicon phase 3 may be 1 mass% or more and 20 mass%, or 2 mass% or more and 15 mass% or less. With the above configuration, the effect of improving cycle characteristics can become more remarkable.

The ratio (mAl/mB) of the mass ratio (mAl) of Al to the mass ratio (mB) of B may be 1.0 or more and 30.0 or less, 1.0 or more and 20.0 or less, or 1.0 or more and 10.0 or less. When mAl/mB is 30.0 or less, the effect of reducing the porosity of the composite particle 1 can be more remarkable. Accordingly, deterioration of the particle structure caused by the pores in the composite particle is suppressed, and thus the cycle characteristics of the battery can be effectively improved. When mAl/mB is 1.0 or more, a decrease in initial charge-discharge efficiency can be reduced. Therefore, when mAl/mB is within the above range, both improved cycle characteristics and good initial charge-discharge efficiency can be achieved.

The conductive layer 4 coats at least a part of the surface of the base particle composed of the alkali aluminate phase 2 and the silicon phase 3. The conductive layer 4 may coat the entire surface of the base particle. The conductive layer 4 is, for example, a thin film layer including a conductive material. Since the composite particle includes the conductive layer 4, the conductivity is improved.

The conductive material may be a conductive carbon material. That is, the conductive layer 4 may include carbon. As the carbon material, graphites such as natural graphite, artificial graphite, and graphitized mesophase carbon, amorphous carbon, soft carbon, hard carbon, etc., can be used. The carbon material may be amorphous carbon. According to the above, it is easy to form a thin conductive layer 4 coating the surface of the base particle. Examples of the amorphous carbon include carbon black, calcined pitch, cokes, and activated carbon.

The thickness of the conductive layer 4 is desirably small so as not to affect the average particle diameter of the composite particle. The thickness of the conductive layer 4 may be 1 nm or more and 200 nm or less, or 5 nm or more and 100 nm or less, in consideration of ensuring conductivity and the diffusibility of ions such as Li ions. The thickness of the conductive layer 4 can be measured by observing a cross-section of the negative electrode active material in which a cross-section of the composite particle is exposed, with an SEM or a transmission electron microscope (TEM).

The porosity of the composite particle before the first charge and discharge may be 25% or less. Since the conductive layer 4 does not affect the porosity, the porosity of the composite particle 6 and the porosity of the base particle (composite particle 1) are substantially the same. By reducing the porosity of the composite particle to 25% or less, the number of portions that can become starting points of cracks and fractures when charge and discharge are repeated is reduced. Accordingly, deterioration of the negative electrode active material is suppressed, and the cycle characteristics of the battery are further improved. The porosity of the composite particle may be 20% or less, or may be 15% or less. The lower limit value of the porosity is not particularly limited, but is 1% as an example.

The porosity of the composite particle means the proportion of voids in a cross-section of the composite particle. The porosity of the composite particle can be measured using an SEM image of a cross-section of the negative electrode active material in which a cross-section of the composite particle is exposed. The porosity of the composite particle is calculated by extracting the regions of the voids by binarizing the SEM image using image analysis software (e.g., imageJ), and dividing the total area of the voids by the total area of the particle cross-section.

The porosity of the composite particle can be controlled to some extent by adjusting the calcining temperature in a production process of the composite particle, the compressive force applied to particles during calcination, mMA/mAl, etc., in addition to the addition of B to the alkali aluminate phase 2 described above.

The composite particle may have a Vickers hardness of 300 HV or more. Since the conductive layer 4 does not affect the Vickers hardness, the Vickers hardness of the composite particle 6 and the Vickers hardness of the base particle (composite particle 1) are substantially the same. When the composite particle has a high Vickers hardness, change in the volume of the silicon phase 3 during charge and discharge is easily suppressed, and thus deterioration of the particle structure can be reduced. As a result, the effect of improving cycle characteristics becomes more remarkable. The Vickers hardness of the composite particle is more preferably 350 HV or more and may be 400 HV or more, or 500 HV or more.

The Vickers hardness of the composite particle can be measured using a Vickers hardness tester. Specifically, the composite particle in which the coating layer 5 has been removed from the negative electrode active material is embedded into a thermosetting resin, and polished with sandpaper No. 400 to expose a cross-section of the composite particle 1. The cross-section is further mirror-finished by polishing with sandpaper No. 2000 and buffing. The Vickers

hardness is measured under the conditions of a load of 1 kg and a holding time of 15 seconds. The upper limit value of the Vickers hardness of the composite particle 1 is not particularly limited, but is, for example, 1500 HV.

The content of each element in the composite particle is measured by the following method. The oxygen content can be measured using an oxygen/nitrogen/hydrogen analyzer. The Si content can be measured using NMR. The carbon content can be measured using a carbon/sulfur analyzer. The contents of other elements can be measured by inductively coupled plasma atomic emission spectrometry. If such a content cannot be measured by inductively coupled plasma atomic emission spectrometry (ICP), the measurement can also be performed using energy dispersive X-ray (EDX). If such a content cannot be measured by any of ICP and EDX, the measurement can also be performed using Auger electron spectrometry (AES). The composition of the alkali aluminate phase 2 can be determined from the content of each element. When measurement is performed from the state of a battery, for example, the battery in a fully discharged state is disassembled, a negative electrode is taken out, washed to remove the non-aqueous electrolyte component, and is dried, and then a cross-section of a negative electrode mixture layer obtained using a cross-section polisher is analyzed, whereby the measurement can be performed.

<Inductively Coupled Plasma Atomic Emission Spectrometry (ICP)>

A sample of the composite particle is completely dissolved in a heated acid solution (mixed acid of hydrofluoric acid, nitric acid, and sulfuric acid), and carbon residue in the solution is removed by filtration. Then, the obtained filtrate is analyzed by ICP to measure the spectral intensity of each element. Next, a calibration curve is prepared using commercially available standard solutions of the elements, and the content of each element included in the composite particle is calculated.

<Energy Dispersive X-ray (EDX)>

If the measurement cannot be performed by ICP, the measurement is performed by EDX. From a backscattered electron image of a cross-section of the negative electrode active material in which a cross-section of the composite particle is exposed, elemental mapping analysis is performed by EDX. Content areas of the target elements are calculated using image analysis software. The observation magnification is, for example, 2000 to 20000 times. When measurement is performed from the state of a battery, 10 composite particles 1 having a maximum particle diameter of 5 μm or more are randomly selected from a cross-sectional image of a backscattered electron image of the negative electrode mixture layer including the negative electrode active material, and elemental mapping analysis is performed on each of the composite particles 1 by EDX. The measured values of the content area of a predetermined element included in the 10 particles are averaged to calculate the content of the target element.

Desired measurement conditions of the cross-sectional SEM-EDX analysis are described below.

Processing apparatus: SM-09010 (Cross Section Polisher), manufactured by JEOL Ltd.
Processing condition: acceleration voltage 6 kV
Current value: 140 μA
Vacuum degree: $1\times10^{-3}$ Pa to $2\times10^{-3}$ Pa
Measurement apparatus: electron microscope SU-70, manufactured by Hitachi, Ltd.
Acceleration voltage during analysis: 10 kV
Field: free mode
Probe current mode: Medium
Probe current range: High
Anode Ap.: 3
OBJ Ap.: 2
Analysis area: 1-μm square
Analysis software: EDAX Genesis
CPS: 20500
Lsec: 50
Time constant: 3.2

<Auger Electron Spectrometry (AES)>

If the measurement cannot be performed by any of ICP and EDX, the measurement is performed by AES. From a backscattered electron image of a cross-section of the negative electrode active material in which a cross-section of the composite particle is exposed, qualitative and quantitative analysis of elements is performed using an AES analyzer (for example, JAMP-9510F, manufactured by JEOL Ltd.). The measurement conditions may be, for example, an acceleration

voltage of 10 kV, a beam current of 10 nA, and an analysis region of 20 μmϕ. When measurement is performed from the state of a battery, 10 composite particles having a maximum particle diameter of 5 μm or more are randomly selected from a cross-sectional image of a backscattered electron image of the negative electrode mixture layer including the negative electrode active material, and qualitative and quantitative elemental analysis is performed on each of the composite particles using the AES analyzer. The contents of a predetermined element included in 10 particles are averaged to calculate the content.

In the process of charge/discharge, a coating can be formed on the surface of the composite particle due to decomposition of the non-aqueous electrolyte, etc. As described above, the composite particle may further include a conductive layer. Therefore, the EDX analysis and AES analysis are performed on a range, for example, 1 μm inward from the peripheral edge of the cross-section of the composite particle such that the thin coating and conductive layer are not included in the measurement range.

<Inert Gas Fusion - Non-Dispersive Infrared Absorption Method>

The content of oxygen included in the composite particle can be measured using an oxygen/nitrogen/hydrogen analyzer (for example, EGMA-830 model, manufactured by HORIBA, Ltd.). The sample is placed in a Ni capsule, the Ni capsule is then placed in a carbon crucible heated with an electric power of 5.75 kW together with Sn pellets and Ni pellets that serve as a flux, and released carbon monoxide gas is detected. A calibration curve is prepared using a standard sample of $Y_2O_3$, and the oxygen content of the sample is calculated.

<Nuclear Magnetic Resonance Spectroscopy (NMR)>

The amount of Si constituting the silicon phase 3 can be quantified using Si-NMR. Desired measurement conditions of the Si-NMR are described below.

Measurement apparatus: solid nuclear magnetic resonance spectrum measurement apparatus (INOVA-400), manufactured by VARIAN, Inc.
Probe: Varian 7 mm CPMAS-2
MAS: 4.2 kHz
MAS speed: 4 kHz
Pulse: DD (45°-pulse+signal capturing time 1H decoupling)
Repetition time: 1200 sec to 3000 sec
Observation width: 100 kHz
Observation center: near -100 ppm
Signal capturing time: 0.05 sec
Number of scans: 560
Sample amount: 207.6 mg

<High-Frequency Induction Heating Furnace Burning - Infrared Absorption Method>

The content of carbon included in the composite particle can be measured by using a carbon/sulfur analyzer (for example, EMIA-520 model, manufactured by HORIBA, Ltd.). The sample is weighed on a magnetic board, a burning auxiliary is added, the sample is inserted into a burning furnace (carrier gas: oxygen) heated to 1350°C, and the amount of carbon dioxide gas generated during burning is detected by infrared absorption. A calibration curve is prepared using, for example, carbon steel (carbon content: 0.49%) manufactured by the Bureau of Analysed Samples Ltd., and the carbon content of the sample is calculated.

[Coating Layer 5]

The coating layer 5 coats at least a part of the surface of the composite particle. The coating layer 5 may coat the entire surface of the composite particle.

The coating layer 5 includes a lithium sulfonate compound and a hydrophobic polymer compound.

The lithium sulfonate compound is a lithium salt of a sulfonic acid compound. Here, the sulfonic acid compound is an organic compound having a sulfonic acid group ($SO_3H$). The sulfonic acid compound may be a monosulfonic acid compound or a disulfonic acid compound.

The lithium sulfonate compound may be a compound represented by the following general formula (1). In the general formula (1), R is an n-valent hydrocarbon group that may have a substituent, and n is 1 or 2.

[Chem. 1]

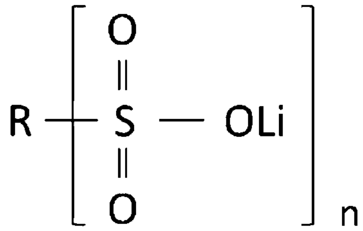

(1)

The number of carbon atoms in the hydrocarbon group is not particularly limited as long as the number is 1 or more. The number of carbon atoms in the hydrocarbon group may be, for example, 20 or less, 10 or less, or 5 or less. The substituent may be, for example, a halogen or a fluorine atom. The hydrocarbon group may be an aliphatic hydrocarbon group. In the general formula (1), R may be an n-valent aliphatic hydrocarbon group having 1 to 5 carbon atoms.

The lithium sulfonate compound may include at least one selected from the group consisting of lithium methanesulfonate, lithium ethanesulfonate, and lithium propanesulfonate. The lithium sulfonate compound may include lithium methanesulfonate.

The mass ratio of the lithium sulfonate compound in the coating layer 5 to the composite particle (hereinafter referred to as "supported amount of the lithium sulfonate compound") may be 1 mass% or more. The supported amount of the lithium sulfonate compound may be 1 mass% or more and 10 mass% or less, 1 mass% or more and 6 mass% or less, or 2 mass% or more and 6 mass% or less.

When the supported amount of the lithium sulfonate compound is 1 mass% or more, the surface of the composite particle can be sufficiently coated with the lithium sulfonate compound, and the effect of suppressing side reactions by the lithium sulfonate compound is easily obtained. When the supported amount of the lithium sulfonate compound is 6 mass% or less, a low-resistance coating layer 5 and a low-resistance negative electrode active material are easily obtained. When the coating layer 5 including the lithium sulfonate compound and the hydrophobic polymer compound is to be formed, for example, an amount of the lithium sulfonate compound in the above range is supported on the surface of the composite particle.

The hydrophobic polymer compound may have good binding properties and thermal fusibility. In this case, the hydrophobic polymer compound can firmly support the lithium sulfonate compound on the surface of the composite particle, so that it is easy to stably obtain the effect of suppressing side reactions by the lithium sulfonate compound. The hydrophobic polymer compound is almost insoluble in water.

From the viewpoint of stability against electrolytes, the hydrophobic polymer compound may include a fluorine resin. The fluorine resin may include at least one selected from the group consisting of polyvinylidene fluoride (PVDF), polytetrafluoroethylene, perfluoroalkoxy alkane (PFA), perfluoroethylene propene copolymer, ethylene tetrafluoroethylene copolymer, polychlorotrifluoroethylene, and ethylene chlorotrifluoroethylene copolymer. The fluorine resin may include PVDF. When the hydrophobic polymer compound is PVDF, since PVDF has good binding properties and a low melting point, the coating layer 5 can be formed at a low heat treatment temperature.

The hydrophobic polymer compound may include a polymer including vinylidene fluoride units, in addition to polyvinylidene fluoride. Examples of the polymer including vinylidene fluoride units include copolymers of vinylidene fluoride with other monomers. Examples of the other monomers include hexafluoropropylene (HFP) and tetrafluoroethylene (TFE). Examples of the polymer including vinylidene fluoride units include polyvinylidene fluoride and modified products thereof, vinylidene fluoride-hexafluoropropylene copolymer, and vinylidene fluoride-chlorotrifluoroethylene copolymer. In the polymer including vinylidene fluoride units, the content rate of vinylidene fluoride units is, for example, 30 mol% or more, and may be 50 mol% or more.

The mass ratio of the hydrophobic polymer compound in the coating layer 5 to the composite particle (hereinafter referred to as "supported amount of the hydrophobic polymer compound") may be 1 mass% or more. The supported amount of the hydrophobic polymer compound may be 1 mass% or more and 10 mass% or less, 1 mass% or more and 6 mass% or less, or 2 mass% or more and 6 mass% or less.

When the supported amount of the hydrophobic polymer compound is 1 mass% or more, a sufficient effect of improving the retention of the lithium sulfonate compound on the surface of the composite particle by the hydrophobic polymer compound is obtained. When the supported amount of the hydrophobic polymer compound is 6 mass% or less, a low-resistance coating layer 5 and a low-resistance negative electrode active material are easily obtained.

When the coating layer 5 includes the lithium sulfonate compound and a fluorine resin (e.g., PVDF) as the hydrophobic polymer compound, the supported amount of the lithium sulfonate compound and the supported amount of the fluorine resin are obtained by the following method.

The negative electrode active material is washed with N-methyl-2-pyrrolidone (NMP) to dissolve the fluorine

resin, and the difference in mass before and after dissolution is calculated as the mass of the fluorine resin. Then, the residue that does not dissolve in NMP is washed with water to dissolve the lithium sulfonate compound. The mass of the lithium sulfonate compound dissolved in water is obtained by quantitative analysis such as ICP emission spectroscopy.

The mass of the residue that does not dissolve in water and NMP is obtained as the mass of the composite particle. When the composite particle includes the conductive layer 4, the residue that does not dissolve in water and NMP is quantitatively analyzed for carbon using a carbon/sulfur analyzer or the like, and the obtained amount of carbon is derived from the carbon material of the conductive layer 4.

The supported amount of the fluorine resin is obtained by the formula: (mass of fluorine resin/mass of composite particle) $\times$ 100 using the mass of the fluorine resin and the mass of the composite particle obtained above. The supported amount of the lithium sulfonate compound is obtained by the formula: (mass of lithium sulfonate compound/mass of composite particle) $\times$ 100 using the mass of the lithium sulfonate compound and the mass of the composite particle obtained above.

The thickness of the coating layer 5 is desirably small so as not to substantially affect the average particle diameter of the negative electrode active material. From the viewpoint of protecting the composite particle from an electrolyte solution, the thickness of the coating layer 5 may be 1 nm or more. From the viewpoint of suppressing an increase in resistance, the thickness of the coating layer 5 may be 300 nm or less. The thickness of the coating layer 5 may be smaller than the thickness of the conductive layer 4. The thickness of the coating layer 5 can be measured by observing a cross-section of the negative electrode active material with an SEM or a TEM.

When surface analysis by X-ray photoelectron spectroscopy (XPS) is performed on the negative electrode active material, a peak derived from the lithium sulfonate compound is observed in a surface layer (including the outermost surface) of the coating layer 5. Specifically, this peak has a binding energy of approximately 165 eV to 170 eV and an intensity (c/s) of 200 to 1000.

(Method for Producing Negative Electrode Active Material)

The negative electrode active material of the present disclosure is produced, for example, by a production method including a step I of obtaining composite particles and a step II of forming the coating layer 5 on the surfaces of the composite particles.

[Step I]

The step I includes the following first to fourth steps.

First step: a step of obtaining an alkali aluminate (hereinafter referred to as "raw material aluminate") that is a raw material.

Second step: a step of forming a composite of the raw material aluminate and a raw material silicon to obtain a composite intermediate in which the raw material silicon is dispersed in the raw material aluminate.

Third step: a step of performing heat treatment on the composite intermediate to obtain a sintered product including the alkali aluminate phase 2 and the silicon phase 3 dispersed in the alkali aluminate phase 2.

Fourth step: a step of crushing the sintered product to obtain composite particles 1 (base particles).

The first step includes, for example, a step of mixing an aluminum compound, a compound containing the alkali metal element, and, if necessary, a compound containing the element M to obtain a mixture, and a step of calcining the mixture to obtain the raw material aluminate. The calcination is performed in an oxidative atmosphere, for example. The calcining temperature may be 400°C or higher and 1200°C or lower, or 700°C or higher and 1100°C or lower.

Examples of the aluminum compound include aluminum oxide, aluminum hydroxide, and aluminum carbonate. One of the aluminum compounds may be used alone, or two or more of the aluminum compounds may be used in combination.

Examples of the compound containing the alkali metal element include lithium carbonate, lithium oxide, lithium hydroxide, lithium hydride, sodium carbonate, sodium oxide, sodium hydroxide, sodium hydride, potassium carbonate, potassium oxide, potassium hydroxide, and potassium hydride. One of the compounds containing the alkali metal element may be used alone, or two or more of the compounds containing the alkali metal element may be used in combination.

The compound containing the element M is, for example, a boron compound. Examples of the boron compound include boron oxide, boric acid, borax, and sodium tetraborate. One of the boron compounds may be used alone, or two or more of the boron compounds may be used in combination.

In the first step, the aluminum compound that has not reacted with the compound containing the alkali metal element in the step of preparing the raw material aluminate may remain in the raw material aluminate. If the amount of the used aluminum compound relative to the compound containing the alkali metal element is large, the aluminum compound tends to remain. When the aluminum compound remaining in the raw material aluminate is $Al_2O_3$, an $Al_2O_3$ phase dispersed in the alkali aluminate phase 2 may be formed in the finally obtained composite particles.

In the second step, for example, the mixture of the raw material aluminate and the raw material silicon is crushed while applying shearing force to the mixture to obtain the fined composite intermediate. An example includes a method of mixing the raw material aluminate and the raw material silicon at a predetermined mass ratio, and fining the mixture by using a crushing machine such as a ball mill.

The raw material silicon is, for example, coarse silicon particles having an average particle diameter of several micrometers to several tens of micrometers. The silicon particles may be prepared such that the crystallite size of the silicon phase 3 calculated by the Scherrer equation from the full width at half maximum of a diffraction peak derived from the Si(111) plane in the X-ray diffraction pattern of the negative electrode active material or the composite particle 1 is 15 nm or less. Alternatively, silicon nanoparticles and raw aluminate nanoparticles may be synthesized and mixed together without using a crushing device.

In the third step, for example, the fined composite intermediate is calcined while applying pressure to the composite intermediate by a hot-press or the like to obtain a sintered product. The pressure applied to the composite intermediate is, for example, 100 MPa or more and may be 100 MPa or more and 300 MPa or less. The higher the pressure in the third step is, the smaller the porosity of the composite particles tends to be. The calcination of the composite intermediate is desirably performed in an inert atmosphere (for example, an atmosphere of argon, nitrogen, or the like). The calcination conditions in the third step also affect the crystallites of the silicon phase 3, and generally, the higher the calcining temperature is, the larger the crystallite size is.

An example of the calcining temperature is 450°C or higher and 1000°C or lower. If the calcining temperature is within this range, it is easy to form a structure in which a minute silicon phase 3 is dispersed in the alkali aluminate phase 2 having low crystallinity. The raw material aluminate is stable at this temperature and hardly reacts with silicon. The calcining temperature may be 550°C or higher and 950°C or lower, or 650°C or higher and 900°C or lower. In order to reduce the porosity of the composite particles, it is desirable to perform calcination at a temperature of 650°C or higher. The calcining time is, for example, 1 hour or longer and 10 hours or shorter.

The fourth step is a step of crushing the composite particles 1 (base particles) so as to have the desired particle size distribution. For example, the base particles are crushed such that the median diameter thereof is 1 μm or more and 25 μm or less.

The step I may further include the following fifth step after the first to fourth steps.

Fifth step: a step of forming the conductive layer 4 on the surfaces of the base particles each composed of the alkali aluminate phase 2 and the silicon phase 3.

The conductive material constituting the conductive layer 4 is desirably a conductive carbon material as described above. Examples of a method for coating the surfaces of the base particles with the carbon material include: a CVD method using a hydrocarbon gas such as acetylene and methane as a raw material; and a method of mixing coal pitch, petroleum pitch, phenol resin, or the like with the base particles and heating and carbonizing the mixture. Alternatively, carbon black may be adhered to the base particles.

In the fifth step, for example, a mixture of the base particles and the carbon material is heated at 700°C or higher and 950°C or lower in an inert atmosphere (for example, an atmosphere of argon, nitrogen, or the like) to form the conductive layer 4 on the surfaces of the base particles. Thus, the composite particles 6 each having the conductive layer 4 on the surface of the base particle are obtained.

[Step II]

The step II is a step of forming the coating layer 5 on the surfaces of the composite particles.

For example, the composite particles are granulated using the composite particles, the lithium sulfonate compound, and the hydrophobic polymer compound, and the granulated powder is then crushed and classified to a desired size, thereby obtaining a negative electrode active material having a desired average particle diameter and having the coating layer 5 formed on the surfaces of the composite particles.

The granulation is performed, for example, by dispersing the composite particles, a powder of the lithium sulfonate compound, and the hydrophobic polymer compound in water, and then spray-drying the dispersion liquid. Accordingly, a coating layer which is a mixed layer of the lithium sulfonate compound and the hydrophobic polymer compound is formed on the surfaces of the composite particles.

The amount of the lithium sulfonate compound added may be 1 mass% or more and 6 mass% or less with respect to the composite particles. The amount of the hydrophobic polymer compound added may be 1 mass% or more and 6 mass% or less with respect to the composite particles.

It is desirable that each of the particle diameters of the lithium sulfonate compound and the hydrophobic polymer compound to be dispersed in water is smaller than the particle diameter of the composite particles. In this case, it is easy to uniformly coat the surfaces of the composite particles with the lithium sulfonate compound and the hydrophobic polymer compound. The average particle diameter of the lithium sulfonate compound may be 1 μm or more and 100 μm or less, or 1 μm or more and 10 μm or less. The average particle diameter of the hydrophobic polymer compound may be 200 nm or

more and 1 μm or less.

The method of forming the coating layer 5 on the surfaces of the composite particles is not limited to the above. For example, the composite particles, a powder of the lithium sulfonate compound, and a powder of the hydrophobic polymer compound may be dry-mixed to obtain a mixture, and then the mixture may be subjected to heat treatment to form the coating layer 5 on the surfaces of the composite particles.

By the mixing treatment, an intermediate (mixture) in which a mixture of the lithium sulfonate compound and the hydrophobic polymer compound is attached to the surfaces of the composite particles is obtained. A ball mill method can be used for the dry-mixing treatment. The amounts of the lithium sulfonate compound and the hydrophobic polymer compound added and the particle diameters thereof may be the same as those described above.

The heat treatment is desirably performed at a temperature equal to or higher than the melting point of the hydrophobic polymer compound and equal to or lower than the decomposition temperature of the hydrophobic polymer compound. When polyvinylidene fluoride (PVDF) is used as the hydrophobic polymer compound, the heat treatment temperature may be equal to or higher than the melting point (150°C to 170°C) of PVDF and equal to or lower than the decomposition temperature (340°C) of PVDF, and is desirably, for example, 200°C or higher and 250°C or lower. The heat treatment may be performed in an inert atmosphere. The heat treatment time is, for example, about 1 hour to 3 hours. The hydrophobic polymer compound in the mixture is liquefied by the heat treatment, and penetrates and diffuses around the composite particles and the particles of the lithium sulfonate compound so as to fill the gaps between the composite particles and the particles of the lithium sulfonate compound and the gaps between the particles of the lithium sulfonate compound. Accordingly, the retention of the lithium sulfonate compound on the surfaces of the composite particles is enhanced. Thus, the coating layer 5 which is a mixed layer of the lithium sulfonate compound and the hydrophobic polymer compound is formed. The mixture after the heat treatment is crushed to obtain a negative electrode active material having a desired average particle diameter.

(Battery)

A battery according to the present embodiment includes a negative electrode, a positive electrode, and an electrolyte. The negative electrode includes the negative electrode active material according to the present embodiment. Since the negative electrode includes the negative electrode active material according to the present embodiment, the battery according to the present embodiment has improved cycle characteristics and also has improved initial charge-discharge efficiency.

FIG. 3 is a vertical cross-sectional view schematically showing an example of the battery according to the present embodiment. A battery 100 is a cylindrical battery including a cylindrical battery case, a wound electrode group 24, and an electrolyte solution which is not shown. The electrode group 24 is housed in the battery case and is in contact with the electrolyte solution.

The battery case is composed of a case body 25 which is a cylindrical metal container with a bottom, and a sealing body 26 which seals the opening of the case body 25. A gasket 37 is placed between the case body 25 and the sealing body 26. The airtightness of the battery case is ensured by the gasket 37. In the case body 25, insulating plates 27 and 28 are respectively placed at both ends of the electrode group 24 in the direction of the winding axis of the electrode group 24.

The case body 25 has, for example, a step portion 31. The step portion 31 can be formed by partially pressing the side wall of the case body 25 from the outside. The step portion 31 may be formed on the side wall of the case body 25 in an annular shape along the circumferential direction of an imaginary circle defined by the case body 25. At this time, the sealing body 26 is supported by, for example, the surface of the step portion 31 on the opening side.

The sealing body 26 includes a filter 32, a lower valve body 33, an insulating member 34, an upper valve body 35, and a cap 36. In the sealing body 26, these members are stacked in this order. The sealing body 26 is attached to the opening of the case body 25 such that the cap 36 is located outside the case body 25 and the filter 32 is located inside the case body 25.

Each of the above members constituting the sealing body 26 has, for example, a disk shape or a ring shape. The above members, except for the insulating member 34, are electrically connected to each other.

The electrode group 24 has a positive electrode 21, a separator 22, and a negative electrode 23. The positive electrode 21, the separator 22, and the negative electrode 23 are all strip-shaped. The width direction of the strip-shaped positive electrode 21 and negative electrode 23 is, for example, parallel to the winding axis of the electrode group 24. The separator 22 is placed between the positive electrode 21 and the negative electrode 23. The positive electrode 21 and the negative electrode 23 are spirally wound with the separator 22 interposed between these electrodes.

When a cross-section of the battery 100 in a direction perpendicular to the winding axis of the electrode group 24 is observed, the positive electrode 21 and negative electrode 23 are stacked alternately in the radial direction of the imaginary circle defined by the case body 25, with the separator 22 interposed between these electrodes.

The positive electrode 21 is electrically connected via a positive electrode lead 29 to the cap 36 which also serves as a positive electrode terminal. One end of the positive electrode lead 29 is connected to, for example, the vicinity of the

center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is welded to, for example, the surface of the filter 32 on the electrode group 24 side.

The negative electrode 23 is electrically connected via a negative electrode lead 30 to the case body 25 which also serves as a negative electrode terminal. One end of the negative electrode lead 30 is connected to, for example, an end portion of the negative electrode 23 in the longitudinal direction of the negative electrode 23. The other end of the negative electrode lead 30 is welded to, for example, the inner bottom surface of the case body 25.

Each component of the battery 100 will be specifically described below.

The positive electrode 21 includes a material that has the property of occluding and releasing metal ions (for example, lithium ions). The positive electrode 21 includes, for example, a positive electrode active material. The positive electrode 21 may include a positive electrode current collector and a positive electrode mixture layer supported on the surface of the positive electrode current collector.

The positive electrode mixture layer includes a positive electrode active material. Examples of the positive electrode active material include lithium-containing transition metal oxides, lithium-containing transition metal phosphates, transition metal fluorides, polyanionic materials, fluorinated polyanionic materials, transition metal sulfides, transition metal oxysulfides, and transition metal oxynitrides. In particular, when a lithium-containing transition metal oxide or a lithium-containing transition metal phosphate is used as the positive electrode active material, the production cost of the battery can be reduced and the average discharge voltage can be increased. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate. At least one selected from these positive electrode active materials can be used.

The positive electrode mixture layer may include a conductive additive, an ion conductor, and a binder, if necessary.

The conductive additive and the ion conductor are used to reduce the resistance of the electrode. Examples of the conductive additive include carbon materials and conductive polymer compounds. Examples of carbon materials include carbon black, graphite, acetylene black, carbon nanotubes, carbon nanofibers, graphene, fullerene, and graphite oxide. Examples of conductive polymer compounds include polyaniline, polypyrrole, and polythiophene. At least one selected from these conductive additives can be used.

The binder is used to improve the binding properties of the materials constituting the electrode. Examples of the binder include polymer materials such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The positive electrode current collector is, for example, a sheet or film made of a metal material such as aluminum, an aluminum alloy, stainless steel, titanium, or a titanium alloy. The sheet or film may be porous or non-porous. As the sheet or film, a metal foil, a metal mesh, or the like is used. A carbon material may be applied as a conductive auxiliary material to the surface of the positive electrode current collector.

The negative electrode 23 includes the negative electrode active material according to the present embodiment. The negative electrode 23 includes, for example, a negative electrode current collector and a negative electrode mixture layer supported on the surface of the negative electrode current collector.

The negative electrode current collector is, for example, a foil made of a metal material such as stainless steel, nickel, a nickel alloy, copper, or a copper alloy.

The negative electrode mixture layer includes the negative electrode active material according to the present embodiment. The negative electrode mixture layer may include other materials such as a conductive additive, an ion conductor, and a binder, if necessary. As the conductive additive, the ion conductor, and the binder, the materials described above for the positive electrode mixture layer can also be used for the negative electrode mixture layer.

The electrolyte solution may include a non-aqueous solvent and a lithium salt dissolved in the non-aqueous solvent. The concentration of the lithium salt in the electrolyte solution may be, for example, 0.5 mol/liter or more and 2 mol/liter or less. By controlling the lithium salt concentration within the above range, an electrolyte solution having excellent ionic conductivity and an appropriate viscosity can be obtained. However, the lithium salt concentration is not limited to the above.

As the non-aqueous solvent, cyclic carbonates, chain carbonates, cyclic ethers, chain ethers, nitriles, amides, etc., can be used. One solvent selected from these solvents may be used, or two or more of these solvents may be used in combination.

As the lithium salt, lithium hexafluorophosphate ($LiPF_6$), lithium tetrafluoroborate ($LiBF_4$), lithium perchlorate ($LiClO_4$), lithium bis(fluorosulfonyl)imide (LiFSI), lithium bis(trifluoromethanesulfonyl)imide (LiTFSI), lithium bisperfluoroethylsulfonylimide ($LiN(SO_2C_2F_5)_2$), $LiAsF_6$, $LiCF_3SO_3$, lithium difluoro(oxalato)borate, etc., can be used. One selected

from these electrolyte salts may be used, or two or more of these electrolyte salts may be used in combination.

Usually, it is desirable to interpose a separator between a positive electrode and a negative electrode. The separator 22 has a high ion permeability and has appropriate mechanical strength and insulating properties. As the separator 22, a microporous thin film, a woven fabric, a nonwoven fabric, or the like can be used. As the material of the separator 22, for example, a polymer can be used. The polymer may be a polyolefin such as polypropylene and polyethylene.

In the battery of the present disclosure, for example, a polymer provided as a separator may be impregnated with the electrolyte solution. That is, the battery of the present disclosure may have a structure in which an electrolyte solution and a polymer are used in combination.

The battery of the present disclosure may further include a solid electrolyte as the electrolyte. That is, the battery of the present disclosure may have a hybrid structure in which an electrolyte solution and a solid electrolyte are used in combination. Examples of solid electrolyte materials are halide solid electrolytes, sulfide solid electrolytes, oxide solid electrolytes, or organic polymer solid electrolytes. In the present disclosure, the term "halide solid electrolyte" refers to a solid electrolyte containing a halogen element as a main component of anions. The term "sulfide solid electrolyte" refers to a solid electrolyte containing sulfur as a main component of anions. The term "oxide solid electrolyte" refers to a solid electrolyte containing oxygen as a main component of anions. The main component of the anions means an anion with the largest amount of substance among all the anions constituting the solid electrolyte.

In the present disclosure, as an example of the structure of the battery according to the present embodiment, the configuration example shown in FIG. 3, that is, a cylindrical nonaqueous electrolyte secondary battery in which a wound electrode group formed by winding a positive electrode and a negative electrode with a separator interposed therebetween and an electrolyte solution are housed in an exterior body, is described. However, the battery according to the present disclosure is not limited to this configuration example. The battery according to the present disclosure may be in any form, such as a prismatic type, a coin type, a button type, or a stack type. Furthermore, as the electrode group in the secondary battery according to the present disclosure, an electrode group of another form, such as an electrode group in which a positive electrode and a negative electrode are stacked with a separator interposed therebetween, may be used instead of a wound electrode group.

FIG. 4 is a cross-sectional view showing a schematic configuration of another example of the battery according to the present embodiment. A battery 200 includes a positive electrode 210, an electrolyte layer 220, and a negative electrode 230. The negative electrode 230 includes the negative electrode active material according to the present embodiment. The electrolyte layer 220 is placed between the positive electrode 210 and the negative electrode 230. The battery 200 is, for example, an all-solid-state battery.

The positive electrode 210 includes a positive electrode current collector 211 and a positive electrode mixture layer 212 supported on the surface of the positive electrode current collector 211. The positive electrode mixture layer 212 is located between the positive electrode current collector 211 and the electrolyte layer 220. The materials described above for the positive electrode 21 in the battery 100 can be used for the positive electrode current collector 211 and the positive electrode mixture layer 212.

The positive electrode mixture layer 212 may include a solid electrolyte. Examples of the solid electrolyte include the solid electrolytes described above as the electrolyte in the battery 100.

The electrolyte layer 220 is a layer including an electrolyte. The electrolyte is, for example, a solid electrolyte. The electrolyte layer 220 may be a solid electrolyte layer. Examples of the solid electrolyte include the solid electrolytes described above as the electrolyte in the battery 100.

The electrolyte layer 220 may further include a binder. As the binder, the materials described above for the positive electrode mixture layer of the battery 100 can also be used for the electrolyte layer 220.

The negative electrode 230 includes a negative electrode current collector 231 and a negative electrode mixture layer 232 supported by the negative electrode current collector 231. The negative electrode mixture layer 232 includes the negative electrode active material according to the present embodiment. The negative electrode mixture layer 232 is located between the negative electrode current collector 231 and the electrolyte layer 220. The materials described above for the negative electrode 23 in the battery 100 can be used for the negative electrode current collector 231 and the negative electrode mixture layer 232.

The negative electrode mixture layer 232 may include a solid electrolyte. Examples of the solid electrolyte include the solid electrolytes described above as the electrolyte in the battery 100.

The battery 200 can be configured as a battery of various shapes, such as a coin type, a cylindrical type, a prismatic type, a sheet type, a button type, a flat type, or a stack type.

(Other Embodiments)

(Supplementary Description)

The following techniques are disclosed by the description of the above embodiment.

(Technique 1)

A negative electrode active material including:

a composite particle; and
a coating layer coating at least a part of a surface of the composite particle, wherein
the composite particle includes an alkali aluminate phase including at least one alkali metal element and Al, and a silicon phase dispersed in the alkali aluminate phase, and
the coating layer includes a lithium sulfonate compound and a hydrophobic polymer compound.

Owing to this configuration, the cycle characteristics of a battery can be improved.

(Technique 2)

The negative electrode active material according to Technique 1, wherein the lithium sulfonate compound includes a compound represented by general formula (1):

[Chem. 2]

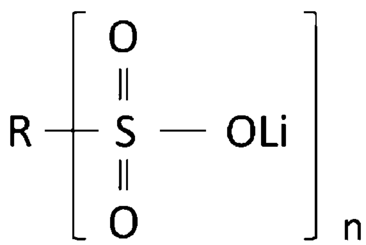

(1)

,

where R is an n-valent aliphatic hydrocarbon group having 1 to 5 carbon atoms, and n is 1 or 2. With this configuration, the cycle characteristics of the battery can be improved.

(Technique 3)

The negative electrode active material according to Technique 1 or 2, wherein the lithium sulfonate compound includes at least one selected from the group consisting of lithium methanesulfonate, lithium ethanesulfonate, and lithium propanesulfonate. With this configuration, the cycle characteristics of the battery can be improved.

(Technique 4)

The negative electrode active material according to any one of Techniques 1 to 3, wherein a mass ratio of the lithium sulfonate compound in the coating layer to the composite particle is 1 mass% or more. With this configuration, side reactions between the composite particle and an electrolyte are further suppressed, and the cycle characteristics and initial charge-discharge efficiency of the battery can be improved.

(Technique 5)

The negative electrode active material according to any one of Techniques 1 to 4, wherein a mass ratio of the hydrophobic polymer compound in the coating layer to the composite particle is 1 mass% or more. With this configuration, a sufficient effect of improving the retention of the lithium sulfonate compound on the surface of the composite particle is obtained, and thus the cycle characteristics and initial charge-discharge efficiency of the battery can be improved.

(Technique 6)

The negative electrode active material according to any one of Techniques 1 to 5, wherein the hydrophobic polymer compound includes a fluorine resin. With this configuration, the cycle characteristics of the battery can be improved.

(Technique 7)

The negative electrode active material according to Technique 6, wherein the fluorine resin includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer. With this configuration, the cycle characteristics of the battery can be improved.

(Technique 8)

The negative electrode active material according to any one of Techniques 1 to 7, wherein the alkali aluminate phase further includes B. With this configuration, the stability and ionic conductivity of the alkali aluminate phase are improved. In addition, the porosity of the composite particle can be reduced, and thus deterioration of a particle structure caused by voids is suppressed. Therefore, the cycle characteristics of the battery can be improved.

(Technique 9)

The negative electrode active material according to Technique 8, wherein, when a mass ratio of Al to a total mass of elements excluding O constituting the alkali aluminate phase and the silicon phase is mAl, and a mass ratio of B to the total mass of the elements excluding O constituting the alkali aluminate phase and the silicon phase is mB, a ratio (mAl/mB) is 1.0 or more and 30.0 or less. With this configuration, a more significant effect of reducing the porosity of the composite particle is obtained, and thus the cycle characteristics and initial charge-discharge efficiency of the battery can be improved.

(Technique 10)

The negative electrode active material according to any one of Techniques 1 to 9, wherein the alkali metal element includes at least one selected from the group consisting of Li, Na, and K. With this configuration, the cycle characteristics of the battery can be improved.

(Technique 11)

The negative electrode active material according to any one of Techniques 1 to 10, wherein the composite particle has a porosity of 25% or less before first charge. With this configuration, deterioration of a particle structure caused by voids is suppressed. Therefore, the cycle characteristics of the battery can be improved.

(Technique 12)

The negative electrode active material according to any one of Techniques 1 to 11, wherein the composite particle includes a base particle composed of the alkali aluminate phase and the silicon phase, and a conductive layer coating at least a part of a surface of the base particle, and the conductive layer includes carbon. With this configuration, the conductivity of the composite particle is improved, and the battery characteristics can be improved.

(Technique 13)

A battery including:

a negative electrode including the negative electrode active material according to any one of Techniques 1 to 12;
a positive electrode; and
an electrolyte.

With this configuration, an effect of improving cycle characteristics is obtained.

EXAMPLES

Hereinafter, the present disclosure will be described in more detail using examples. The following examples are each merely one embodiment, and the present disclosure is not limited thereto.

<Production of Negative Electrode Material Particles>

(Example 1)

[Production of Composite Particles]

$Al_2O_3$, $Li_2CO_3$, and $B_2O_3$ were mixed at a mass ratio of $Al_2O_3$:$Li_2CO_3$:$B_2O_3$ = 55:25:20. The mixture was calcined in air at 750°C for 10 hours. The calcined product was crushed to obtain a raw material aluminate having an average particle diameter of 10 μm.
The raw material aluminate (average particle diameter: 10 μm) and raw material silicon (3N, average particle diameter: 10 μm) were mixed at a mass ratio of 40:60. The obtained mixture was charged into a pot (made of SUS, capacity: 500 mL) of a planetary ball mill (P-5, manufactured by Fritsch GmbH). Next, 24 balls (diameter: 20 mm) made of SUS were placed in the pot, the pot was closed with a lid, and the mixture was crushed at 200 rpm for 50 hours in an inert atmosphere. Accordingly, a powdered mixture was obtained.
The obtained powdered mixture was taken out in the inert atmosphere, and the powdered mixture was calcined at 800°C for 4 hours in the inert atmosphere while applying a pressure of 200 MPa using a hot-pressing machine. Accordingly, a sintered product was obtained.
The obtained sintered product was crushed and passed through a 40-μm mesh. Thus, base particles (LAX particles) in which a silicon phase was dispersed in an alkali aluminate phase containing predetermined amounts of Li and B were obtained.
The obtained base particles and coal pitch (MCP250, manufactured by JFE Chemical Corporation) were mixed. At this time, the amount of mixed coal pitch was 5 parts by mass per 100 parts by mass of the base particles. The mixture was calcined at 800°C for 5 hours in an inert atmosphere to form a conductive layer on the surfaces of the base particles. Thereafter, a sieve was used to obtain composite particles with an average particle diameter of 5 μm which were LAX particles each including a conductive layer.

[Formation of Coating Layer]

The composite particles, a powder of lithium methanesulfonate (MSL), and a polyvinylidene fluoride (PVDF) dispersion liquid were dispersed in water. At this time, the amount of MSL was 2 parts by mass per 100 parts by mass of the composite particles, and the amount of PVDF was 2 parts by mass per 100 parts by mass of the composite particles. Thereafter, the dispersion liquid was spray-dried to obtain a granulated powder.
The obtained granulated powder was crushed using a mill (IKA MultiDrive basic, manufactured by IKA) and then classified using an ultrasonic generator (manufactured by Artech Ultrasonic Systems) to form a coating layer, which was a composite layer of MSL and PVDF, on the surfaces of the composite particles.
Thus, particles of Example 1 were produced. The average particle diameter of the particles of Example 1 was 7 μm.

(Example 2)

Particles of Example 2 were produced in the same manner as in Example 1, except that the amount of MSL and the amount of PVDF used in forming the coating layer were each changed to 4 parts by mass per 100 parts by mass of the composite particles.

(Example 3)

Particles of Example 3 were produced in the same manner as in Example 1, except that the amount of MSL and the amount of PVDF used in forming the coating layer were each changed to 6 parts by mass per 100 parts by mass of the composite particles.

(Example 4)

Particles of Example 4 were produced in the same manner as in Example 1, except that the amount of MSL and

the amount of PVDF used in forming the coating layer were each changed to 8 parts by mass per 100 parts by mass of the composite particles.

(Comparative Example 1)

Particles of Comparative Example 1 were produced in the same manner as in Example 1, except that no coating layer was formed on the surfaces of the composite particles. That is, the particles of Comparative Example 1 were composite particles that were the LAX particles each including the conductive layer in Example 1.

(Comparative Example 2)

[Production of Composite Particles]

$Li_2CO_3$ and $SiO_2$ were mixed such that the atomic ratio: Si / Li was 1.05, to obtain a mixture. The mixture was calcined at 800°C for 10 hours in an inert gas atmosphere to obtain a lithium silicate ($Li_2Si_2O_5$). Then, the calcined product was crushed to obtain a lithium silicate having an average particle diameter of 10 μm.

The lithium silicate (average particle diameter: 10 μm) and raw material silicon (3N, average particle diameter: 10 μm) were mixed at a mass ratio of 40:60. The mixture was charged into a pot (made of SUS, capacity: 500 mL) of a planetary ball mill (P-5, manufactured by Fritsch GmbH). Next, 24 balls (diameter: 20 mm) made of SUS were placed in the pot, the pot was closed with a lid, and the mixture was crushed at 200 rpm for 50 hours in an inert atmosphere.

The powdered mixture was taken out in the inert atmosphere, and the powdered mixture was calcined at 600°C for 4 hours in the inert atmosphere while applying pressure using a hot-pressing machine. Accordingly, a sintered product was obtained.

The obtained sintered product of the mixture was crushed and passed through a 40-μm mesh. Then, a sieve was used to obtain base particles (LSX particles) with an average particle diameter of 10 μm in which a silicon phase was dispersed in a lithium silicate phase.

A conductive layer was formed on the surfaces of the obtained base particles in the same manner as in Example 1. Then, a sieve was used to obtain composite particles with an average particle diameter of 5 μm which were LSX particles each including a conductive layer. These composite particles were considered as particles of Comparative Example 2.

(Reference Example 1)

[Production of Composite Particles]

Composite particles which were LSX particles each including a conductive layer were produced in the same manner as in Comparative Example 2.

[Formation of Coating Layer]

A coating layer which was a composite layer of MSL and PVDF was formed on the surfaces of the composite particles in the same manner as in Example 1.

Thus, particles of Reference Example 1 were produced.

<Production of Battery>

Batteries of Examples 1 to 4, Comparative Examples 1 and 2, and Reference Example 1 were produced using the particles of Examples 1 to 4, Comparative Examples 1 and 2, and Reference Example 1 as follows.

[Production of Negative Electrode]

The particles and graphite were mixed at a mass ratio of 10:90 to obtain a mixture. The mixture was used as a negative electrode active material. The negative electrode active material, carboxymethyl cellulose (CMC), and styrene butadiene rubber (SBR) were mixed at a mass ratio of negative electrode active material : CMC : SBR = 97.5:1:1.5 to obtain a negative electrode mixture, and water was added to the negative electrode mixture, followed by stirring to prepare a negative electrode slurry. Next, the negative electrode slurry was applied to both sides of a copper foil which was a negative electrode current collector, and the coating film was dried and then rolled. The copper foil was cut to a predetermined size to produce a negative electrode in which a negative electrode mixture layer was formed on both sides of the negative electrode current collector. At this time, a negative electrode current collector exposed portion was provided at a part of the

negative electrode.

[Production of Positive Electrode]

A positive electrode active material, acetylene black, and PVDF were mixed at a mass ratio of positive electrode active material : acetylene black : PVDF = 95:2.5:2.5, and an appropriate amount of N-methyl-2-pyrrolidone (NMP) was added to the positive electrode mixture, followed by stirring to prepare a positive electrode slurry. A lithium transition metal composite oxide represented by $LiNi_{0.88}Co_{0.09}Al_{0.03}O_2$ was used as the positive electrode active material. Next, the positive electrode slurry was applied to both sides of an aluminum foil which was a positive electrode current collector, and the coating film was dried and then rolled. The aluminum foil was cut to a predetermined size to produce a positive electrode in which a positive electrode mixture layer was formed on both sides of the positive electrode current collector. At this time, a positive electrode current collector exposed portion was provided at a part of the positive electrode.

[Preparation of Non-Aqueous Electrolyte]

A non-aqueous electrolyte was prepared by dissolving lithium hexafluorophosphate ($LiPF_6$) at a concentration of 1 mol/L in a mixed solvent in which ethylene carbonate (EC), ethyl methyl carbonate (EMC), and dimethyl carbonate (DMC) were mixed at a volume ratio of EC:EMC:DMC = 20:5:75.

[Production of Non-Aqueous Electrolyte Secondary Battery]

A positive electrode lead made of aluminum was attached to the positive electrode current collector exposed portion of the positive electrode, and a negative electrode lead made of nickel was attached to the negative electrode current collector exposed portion of the negative electrode. The positive electrode and the negative electrode were spirally wound with a polyolefin separator interposed therebetween, and then pressed in the radial direction to produce a flat wound-type electrode assembly. This electrode assembly was housed in an exterior body made of an aluminum laminate sheet, the non-aqueous electrolyte was injected, and then an opening of the exterior body was sealed to obtain a battery.

[Battery Evaluation]

The batteries of Examples 1 to 4, Comparative Examples 1 and 2, and Reference Example 1 were evaluated for initial charge-discharge efficiency and cycle characteristics by the following methods.

(Initial Charge-Discharge Efficiency)

For the batteries of Examples 1 to 4, Comparative Examples 1 and 2, and Reference Example 1, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. By this charging and discharging, the initial charge-discharge efficiency of the batteries of Examples 1 to 4, Comparative Examples 1 and 2, and Reference Example 1 was obtained. Using the obtained initial charge-discharge efficiency, the amount of side reactions was determined by the following formula. Here, in the formula, E is the value (%) of the initial charge-discharge efficiency of each of Examples 1 to 4, Comparative Examples 1 and 2, and Reference Example 1, and E0 is the value (%) of the initial charge-discharge efficiency of Comparative Example 1. The results are shown in Table 1.

$$\text{Amount of side reactions} = \{(100 - E)/(100 - E0)\} \times 100$$

(Cycle Characteristics)

For the batteries of Examples 1 to 4, Comparative Examples 1 and 2, and Reference Example 1, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. The above charging and discharging were defined as one cycle, 300 cycles were performed, and a discharge capacity maintenance rate was calculated using the following formula.

$$\text{Discharge capacity maintenance rate} = (\text{300th cycle discharge capacity}/\text{1st cycle discharge capacity}) \times 100$$

Using the calculated discharge capacity maintenance rate, a cycle degradation rate was calculated by the following formula. Here, in the formula, R is the value of the discharge capacity maintenance rate of each of Examples 1 to 4, Comparative Examples 1 and 2, and Reference Example 1, and R0 is the value of the discharge capacity maintenance rate of Comparative Example 1. The results are shown in Table 1.

$$\text{Cycle degradation rate} = \{(100 - R)/(100 - R0)\} \times 100$$

[Table 1]

| | Base particle | Ion-conduction phase | Pitch addition amount (mass%) | MSL addition amount (mass%) | PVDF addition amount (mass%) | Side reaction amount | Cycle degradation rate |
|---|---|---|---|---|---|---|---|
| Example 1 | LAX | Li aluminate | 5 | 2 | 2 | 89.1 | 84.7 |
| Example 2 | LAX | Li aluminate | 5 | 4 | 4 | 87.5 | 82.8 |
| Example 3 | LAX | Li aluminate | 5 | 6 | 6 | 86.0 | 82.3 |
| Example 4 | LAX | Li aluminate | 5 | 8 | 8 | 83.7 | 78.5 |
| Comparative Example 1 | LAX | Li aluminate | 5 | 0 | 0 | 100 | 100 |
| Comparative Example 2 | LSX | Li silicate | 5 | 0 | 0 | 89.1 | 185.7 |
| Reference Example 1 | LSX | Li silicate | 5 | 2 | 2 | 85.2 | 180 |

(Discussion)

The batteries of Examples 1 to 4 had smaller cycle degradation rates than the batteries of Comparative Examples 1 and 2 and Reference Example 1. That is, the batteries of Examples 1 to 4 had better cycle characteristics than the batteries of Comparative Examples 1 and 2 and Reference Example 1. Furthermore, the batteries of Examples 1 to 4 had smaller amounts of side reactions than the battery of Comparative Example 1. That is, the batteries of Examples 1 to 4 exhibited higher initial charge-discharge efficiency than the battery of Comparative Example 1. In addition, the batteries of Examples 2 to 4 had smaller amounts of side reactions than the battery of Comparative Example 2.

INDUSTRIAL APPLICABILITY

The technology of the present disclosure is useful for batteries such as lithium-ion secondary batteries.

## Claims

**1.** A negative electrode active material comprising:

a composite particle; and
a coating layer coating at least a part of a surface of the composite particle, wherein
the composite particle includes an alkali aluminate phase including at least one alkali metal element and Al, and a silicon phase dispersed in the alkali aluminate phase, and
the coating layer includes a lithium sulfonate compound and a hydrophobic polymer compound.

**2.** The negative electrode active material according to claim 1, wherein the lithium sulfonate compound includes a

compound represented by general formula (1):

[Chem. 1]

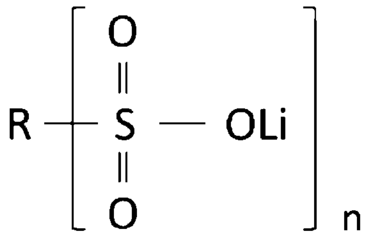

(1)

, where R is an n-valent aliphatic hydrocarbon group having 1 to 5 carbon atoms, and n is 1 or 2.

3. The negative electrode active material according to claim 2, wherein the lithium sulfonate compound includes at least one selected from the group consisting of lithium methanesulfonate, lithium ethanesulfonate, and lithium propanesulfonate.

4. The negative electrode active material according to claim 1, wherein a mass ratio of the lithium sulfonate compound in the coating layer to the composite particle is 1 mass% or more.

5. The negative electrode active material according to claim 1, wherein a mass ratio of the hydrophobic polymer compound in the coating layer to the composite particle is 1 mass% or more.

6. The negative electrode active material according to claim 1, wherein the hydrophobic polymer compound includes a fluorine resin.

7. The negative electrode active material according to claim 6, wherein the fluorine resin includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer.

8. The negative electrode active material according to claim 1, wherein the alkali aluminate phase further includes B.

9. The negative electrode active material according to claim 8, wherein

when a mass ratio of Al to a total mass of elements excluding O constituting the alkali aluminate phase and the silicon phase is mAl, and
a mass ratio of B to the total mass of the elements excluding O constituting the alkali aluminate phase and the silicon phase is mB,
a ratio (mAl/mB) is 1.0 or more and 30.0 or less.

10. The negative electrode active material according to claim 1, wherein the alkali metal element includes at least one selected from the group consisting of Li, Na, and K.

11. The negative electrode active material according to claim 1, wherein the composite particle has a porosity of 25% or less before first charge.

12. The negative electrode active material according to claim 1, wherein

the composite particle includes a base particle composed of the alkali aluminate phase and the silicon phase, and
a conductive layer coating at least a part of a surface of the base particle, and
the conductive layer includes carbon.

13. A battery comprising:

a negative electrode including the negative electrode active material according to any one of claims 1 to 12;

a positive electrode; and
an electrolyte.

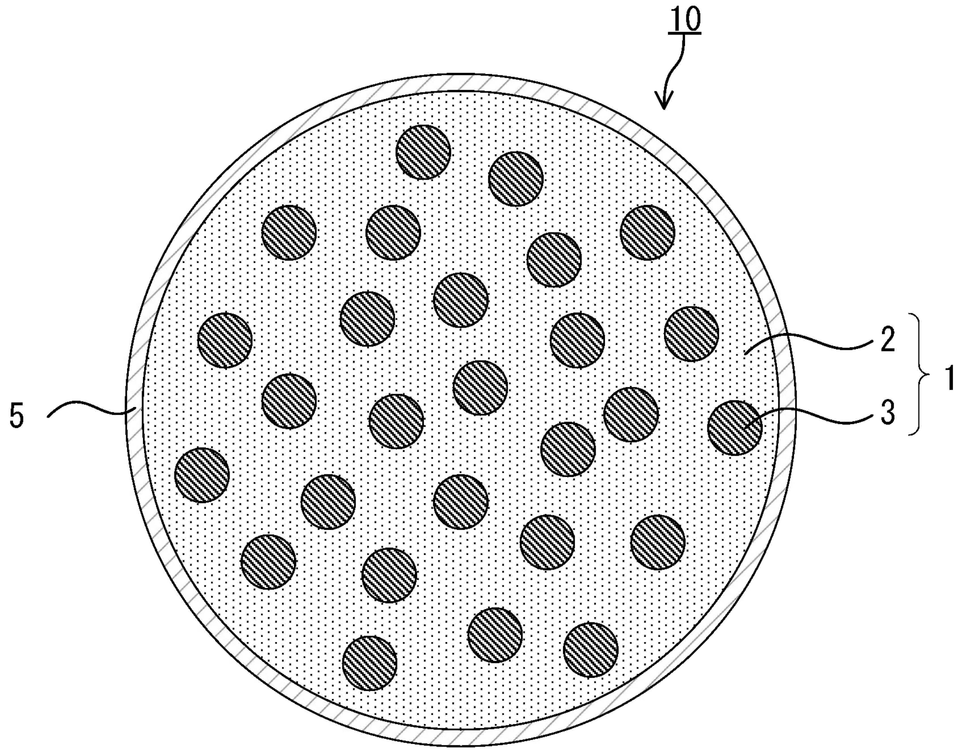


FIG.1

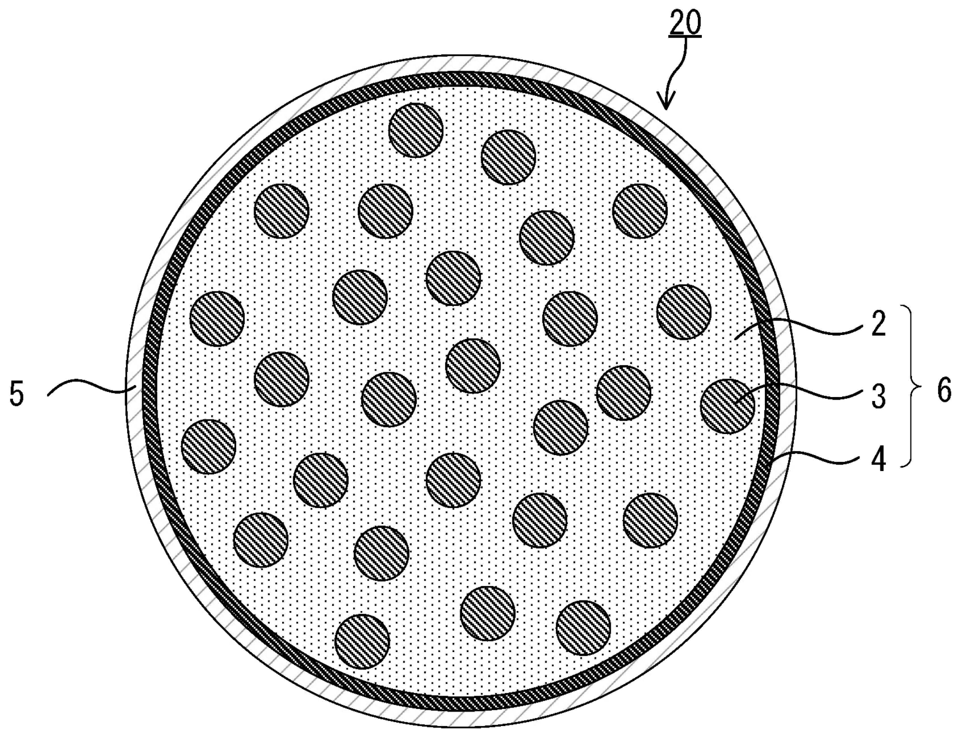


FIG.2

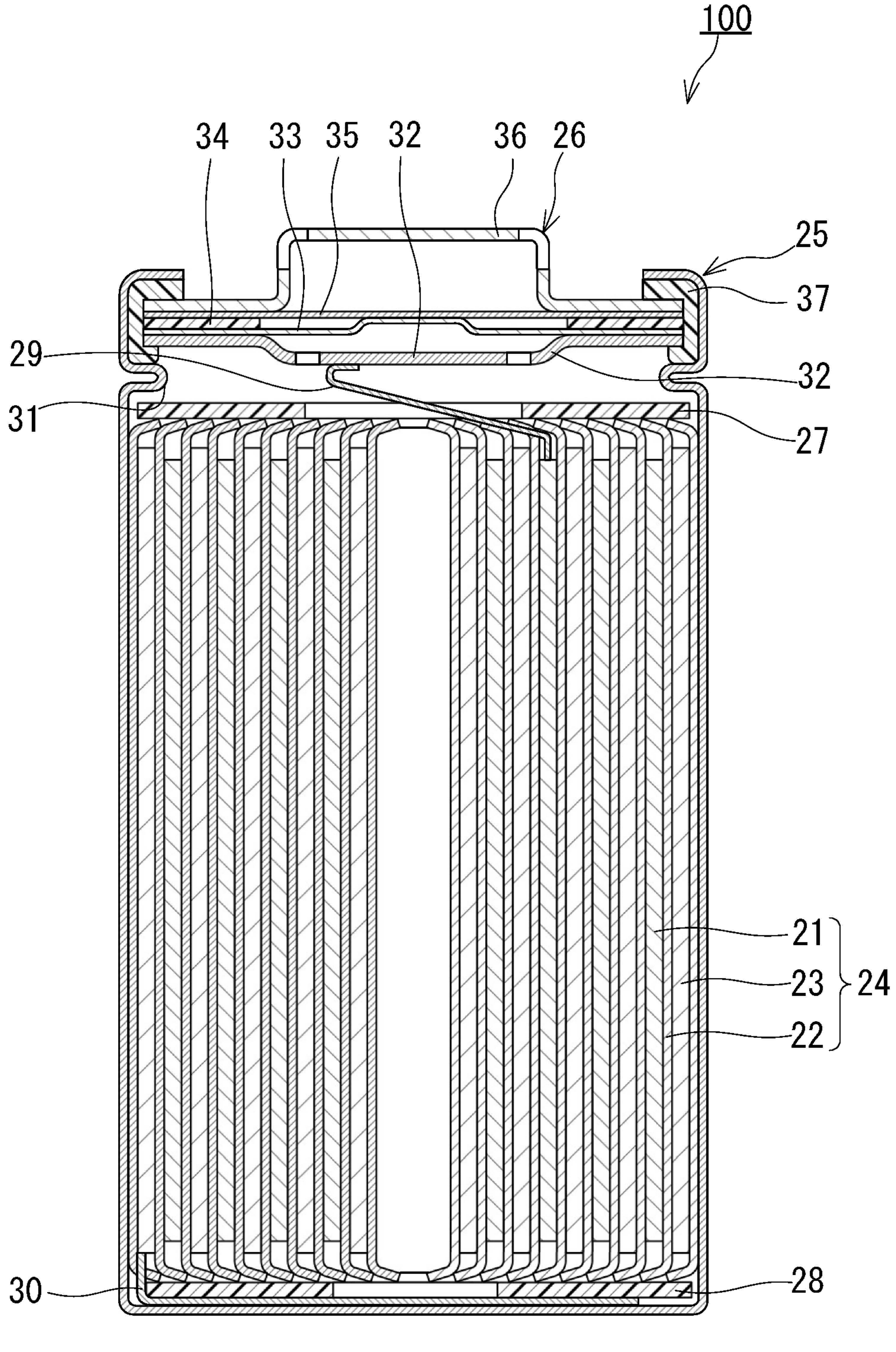


FIG.3

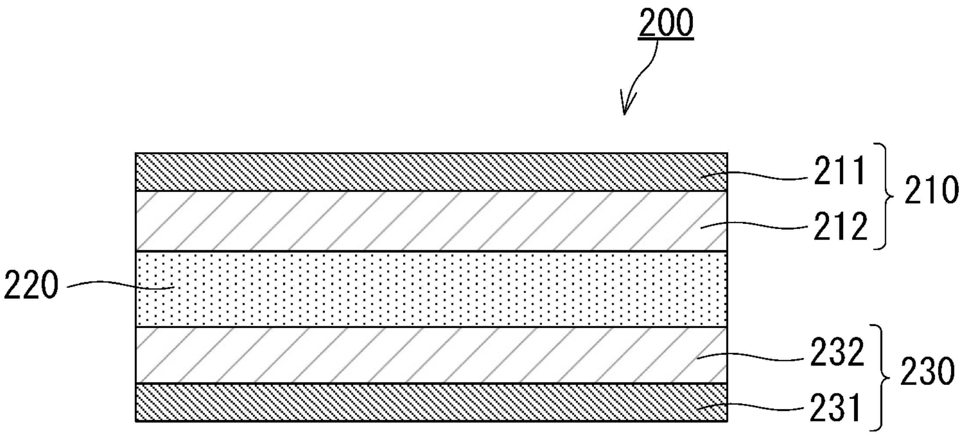


FIG.4

## INTERNATIONAL SEARCH REPORT

International application No.
**PCT/JP2024/026719**

**A. CLASSIFICATION OF SUBJECT MATTER**

***H01M 4/36***(2006.01)i; ***H01M 4/38***(2006.01)i
FI: H01M4/36 A; H01M4/36 C; H01M4/38 Z

According to International Patent Classification (IPC) or to both national classification and IPC

**B. FIELDS SEARCHED**

Minimum documentation searched (classification system followed by classification symbols)

H01M4/00-4/62, 10/00-10/39

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2014/119375 A1 (NEC CORPORATION) 07 August 2014 (2014-08-07) paragraphs [0015]-[0102] | 1-13 |
| Y | WO 2022/113500 A1 (PANASONIC INTELLECTUAL PROPERTY MANAGEMENT CO., LTD.) 02 June 2022 (2022-06-02) paragraphs [0003]-[0113] | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/026719**

| Patent document cited in search report | Publication date (day/month/year) | Patent family member(s) | Publication date (day/month/year) |
|---|---|---|---|
| WO 2014/119375 A1 | 07 August 2014 | US 2016/0006010 A1<br>paragraphs [0013]-[0102] | |
| WO 2022/113500 A1 | 02 June 2022 | US 2024/0021806 A1<br>paragraphs [0003]-[0177]<br>EP 4254551 A1<br>CN 116636036 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022113500 A1